# EUROPEAN PATENT APPLICATION

(11) **EP 0 829 654 A2**
(43) Date of publication of application: **18.03.1998**
(21) Application number: 97830443.4
(22) Date of filing: 09.09.1997
(51) Int. Cl.: F16C 13/00

(54) **Roller for widening and stretching a web form material**

(30) Priority: 11.09.1996 IT FI960211
(71) Applicant: GALILEO VACUUM TEC S.p.A., 50047 Prato (IT)
(72) Inventor: Fusi, Andrea, 50136 Firenze (IT)
(74) Representative: Mannucci, Michele

(57) **Abstract**

The widening roller comprises a curved shaft (3) on which is supported a plurality of bushes (7) of circular cross section, disposed in sequence along the axis (A) of said curved shaft (3). Each of said bushes (7) has a truncated conical external surface the dimensions of the major and minor bases of bushes adjacent to each other vary gradually from the middle to the ends of the roller (1) in such a way that the plane (P-P) containing the curved axis (A) of said shaft intersects the surfaces of revolution of said bushes along an approximately straight line (R-R).

## Description

### Technical field

The present invention relates to what is known as a widening roller for widening or stretching sheets or strips of web form material.

Rollers of this type are commonly used in machines and installations in which it is necessary to supply a web form material and in a stretched state, for example a fabric, a sheet of paper, a plastic film, or similar. Typically, these rollers, also called humpback rollers because of their particular shape, are used in vacuum deposition installations, and the web form material on which the deposition is carried out is run around them.

### Background art

Widening rollers have a curved axis and an external surface which, instead of being cylindrical, has a development approximately in the form of a portion of a toroidal surface, produced by deformation of a cylindrical surface by curvature of the axis. Each longitudinal line over the surface of the roller is thus subject to elongation and shortening during the rotation: the maximum length is reached when the line is on the outer curve and the minimum length is reached when it is on the inner curve. When a web form material, for example a plastic film, is run over the surface of the widening roller, this material may be stretched, for example in order to eliminate any folds or wrinkles, if it comes into contact with the widening roller at a point at which the corresponding contact line has a length smaller than the maximum length. The web form material is thus accompanied, in the rotation of the roller, towards the outer curve, and follows the gradual elongation of the lines defining the surface of the roller, with a consequent widening of the material.

At the present time, these rollers are made with an outer surface formed by a sleeve of rubber or other deformable material. Examples of rollers made in this way are described in FR-A-2.210.240 and in DE-A-2.201.844. The rubber covering is supported by a plurality of bearings threaded on the curved shaft of the roller. DE-A-3,338,965 describes a similar roller in which metal sleeves are inserted into the rubber covering.

These rollers have considerable disadvantages. The rubber covering is subjected to a cyclic deformation which requires a considerable force. It is therefore normally necessary for these rollers to be powered, with a consequent consumption of power and problems of synchronization of the rotation of the widening roller with the return rollers before and after said widening roller, which are located on the path of said web form material. When the roller is idle and is caused to rotate by said web form material, by the effect of the friction between the film and the roller, this causes intense deformations of said film, due to the force required to obtain the rotation of the roller by overcoming the resistance to the deformation of the rubber covering.

To overcome these disadvantages, studies have been made of some systems in which the roller consists of a plurality of collars or bushes threaded on the curved shaft and supported on it in such a way that they are idle. The bushes, which are identical to each other, have a cylindrical development, and are caused to rotate by friction with the web form material running over them. A solution of this type is described in EP-B-0 470 332.

Regardless of the shape of the surface of the widening roller, this imparts a considerable deformation to the web form material. The web form material is deformed on the hump of the widening roller in such a way that, in the case of an ideal weft line of the web form material moving on to the widening roller, in other words a straight line perpendicular to the direction of the feed of the material, on leaving the roller this line will have been transformed by deformation into a curved line with the convexity in the direction of the feed of the film. In other embodiments, in which the roller is formed by adjacent cylindrical bushes, the disposition is such that (see EP-B-0 470 332) the web form material undergoes a stepped deformation in the area of contact with the roller, in this case also with negative consequences in terms of permanent deformation.

### Objects of the invention

The object of the present invention is to provide a widening roller of the type comprising a curved shaft on which is supported a plurality of bushes of circular cross section, disposed in sequence along the axis of said shaft, and which does not have the disadvantages of conventional widening rollers.

In particular, one object of the invention is to provide a roller which substantially reduces the deformation of and the stress on the web form material.

A further object of the present invention is to provide a roller which is easily constructed and easily fitted.

### Disclosure of the invention

These and further objects and advantages, which to those skilled in the art will be evident from the following text, are achieved by making the bushes supporeted on the curved shaft have a non-cylindrical external surface of revolution, with a major base and a minor base; and by making the dimensions of the major and minor bases of adjacent bushes change gradually from the middle to the ends of the roller in such a way that the plane containing the curved axis of said shaft intersects the surfaces of revolution of said bushes along an approximately straight line.

It is thus possible to dispose the roller in such a way that the web form material running over it to be widened leaves the widening roller along an approximately straight line. As will be clear from the description of one example of an embodiment, this reduces the deformation of the web form material.

In practice, the approximately straight line, which is obtained by intersection of the plane containing the curved axis of the shaft with the surface of revolution of the bushes forming the roller, may lie on the outer curve or on the inner curve of the axis. The variation of the dimensions of the major and minor bases of the bushes will be different in the two cases: in a first case, the dimensions of the major and minor bases of said bushes will increase from the middle of the roller towards its ends; in the other case, it will decrease from the middle of the shaft towards its ends.

In one embodiment, the external surface of the bushes has a truncated conical development.

The curved shaft may consist of a deformed beam; for example, it may be produced by the deformation of a rectilinear shaft supported at its ends and loaded in the middle with a concentrated load until an adequate deflection, for example of the order of 5-20 mm, is reached.

However, it is to be understood that in the present description and in the attached claims the term "curved shaft" indicates not only a member consisting of a single unit, although this is the most advantageous and simplest solution in respect of construction. The curved shaft may also be produced by the assembly of a rectilinear core with a plurality of collars of appropriate shape mounted on it.

In one embodiment, each bush is supported so that it is idle on said curved shaft by means of bearings mounted on a sleeve fitted on said shaft. The sleeves may advantageously have two internal annular projections, spaced apart, forming support points on the outer surface of said curved shaft. In this way it is simple to mount cylindrical sleeves of identical development on to the curved shaft.

Preferably, the sleeves are linked together in such a way, for example by means of frontal engagement systems, that they do not rotate with respect to each other.

Further advantageous characteristics of the roller according to the invention are indicated in the attached claims.

### Brief description of the drawings

The invention will be more clearly understood from the description and the attached drawing, which shows a non-restrictive embodiment of the invention. In the drawing,
Fig. 1 is a front elevation of the widening roller in a first embodiment;
Figs. 2A, 2B show two portions of the roller shown in Fig. 1, in longitudinal section, with the axis straightened;
Fig. 3 is a schematic cross section at the middle of the roller shown in Fig. 1, with the web form material running over it;
Fig. 4 is a front elevation of the widening roller in a second embodiment; and
Figs. 5A, 5B show two portions of the roller shown in Fig. 4 in longitudinal section, with the axis straightened.

### Detailed description of the invention

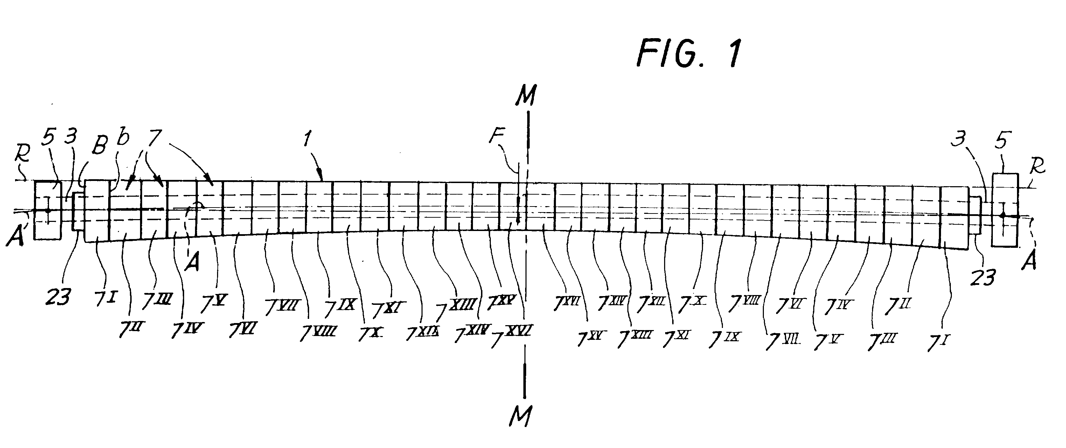

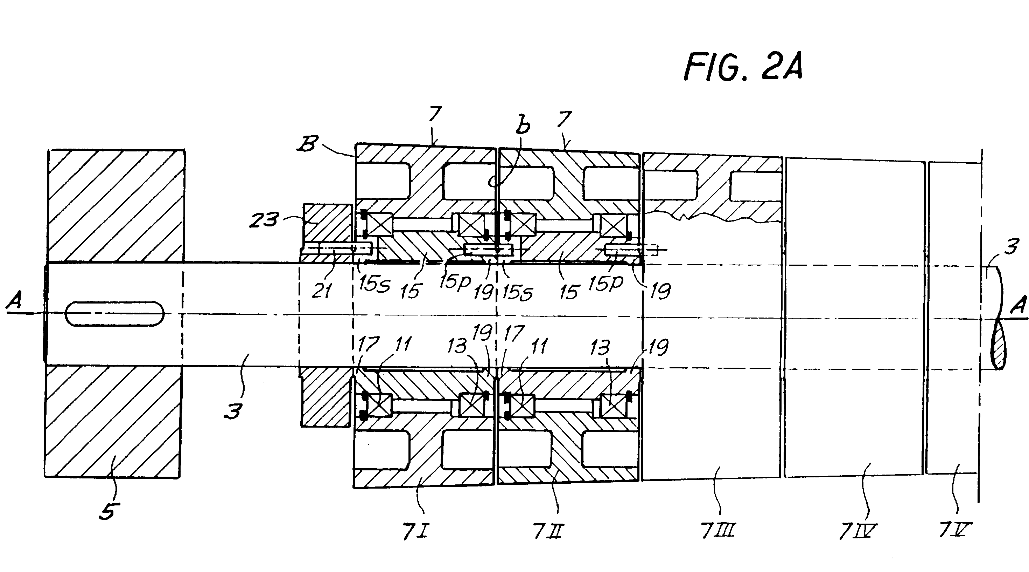

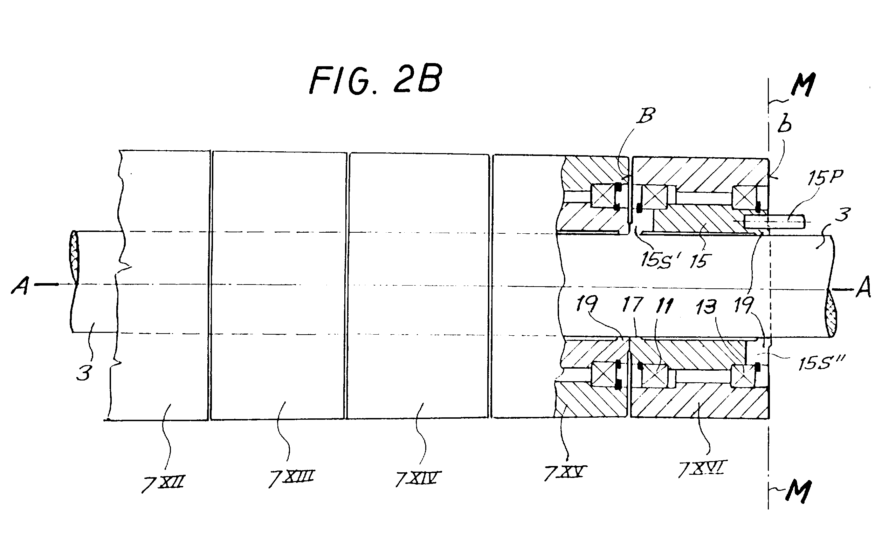

Figs. 1 to 3 show a first example of an embodiment of the roller according to the invention, in which the bushes mounted on the shaft have a conical development with dimensions increasing from the middle towards the ends. Fig. 1 is a view of the roller in its final configuration, in other words with its axis curved, while Figs. 2A, 2B show in greater detail the individual bushes and the assembly system, for some portions of the roller only, in a representation in which the axis is kept straight to simplify the drawing. However, it should be understood that the axis of the roller shown in Figs. 2A, 2B is in reality curved as indicated in the schematic view in Fig. 1.

The roller is indicated in a general way by the number 1 and has a curved shaft 3, with an axis A. The number 5 indicates schematically the end supports. The axis A has a curvature such that a deflection F is formed. The deformation may be produced, for example, by supporting the shaft 3 at its ends and applying a concentrated load to its middle. The method by which the shaft 3 is deformed has a certain importance, as will be clearly seen from the following text, since the geometric variation of the axis A after the deformation determines the size of the bushes which are to be mounted on the shaft.

On the shaft 3 there is mounted a set of bushes 7 of variable shape and of truncated conical development, their truncated conical surface being indicated by 7S. In the example illustrated, a set of thirty-two bushes is provided, disposed with a symmetrical variation about the median plane, whose path is indicated by M-M. Sixteen pairs of bushes 7, identical to each other, are thus provided, and are disposed symmetrically on the two halves of the shaft 3. In Fig. 1, the bushes of the two sets of sixteen bushes 7 are indicated with the numbering 7^{I}...7^{XVI}. In Figs. 2A, 2B, the system of fitting on the shaft 3 is also shown in detail for the bushes 7^{I}, 7^{II}, 7^{XVI}. Only the outer profile of the remaining bushes is shown; it is to be understood that the fitting system remains substantially unchanged.

Each bush 7 has a major base B and a minor base b. The dimensions of the major and minor bases increase from the middle (the plane with the path M-M) to the end, in other words from the bush 7^{XVI} to the bush 7^{I}. Additionally, the major base B of each bush (except the bush 7^{I}) has a diameter corresponding to the diameter of the minor base b of the adjacent larger bush. Thus, the bush 7^{II} has a major base B whose diameter is equal to the diameter of the minor base b of the bush 7^{I} and a minor base whose diameter is equal to the diameter of the major base B of the next bush 7^{III}.

The difference between the diameter of the major base B and the diameter of the minor base b of each bush depends on the configuration of the axis A of the shaft 3. The dimensional change is calculated from the equation of the deformed axis A in such a way that the intersection between the plane containing the axis A of the deformed shaft 3 intersects the truncated conical surfaces of the bushes 7 along two lines, one of which is approximately straight, and is indicated by R-R in the drawing (Fig. 1).

In the example illustrated, the bushes are of equal height, for greater simplicity of construction, but the possibility of making bushes of variable height is not excluded.

Each bush 7 is fitted, with the interposition of two bearings 11, 13, on a corresponding sleeve 15 having a substantially cylindrical development with two internal annular projections 17, 19 which form surfaces for support on the shaft 3. The projections 17, 19 are disposed at the ends of the corresponding sleeve 15 and have a limited development in the axial direction.

Each of the sleeves 15 associated with the bushes 7^{I}-7^{XV} is provided with a radial groove 15S at one end and with a key or pin 15P at the opposite end. Each key 15P of a sleeve 15 is inserted into the radial groove 15S of the adjacent sleeve in such a way that the individual sleeves are fixed torsionally and cannot rotate with respect to each other. The first sleeve 15, with which the bush 7' is associated, is fixed by means of an end key 21 integral with a ring 23 locked on the shaft 3. The sleeves 15 bear on each other, and the end sleeves bear on the rings 23, thus producing an axial and torsional fixing of the individual sleeves 15 to the shaft 3. The two sleeves 15 adjacent to the median plane with the path M-M have two radial grooves 15S', 15S", disposed on the two ends and in diametrically opposite positions.

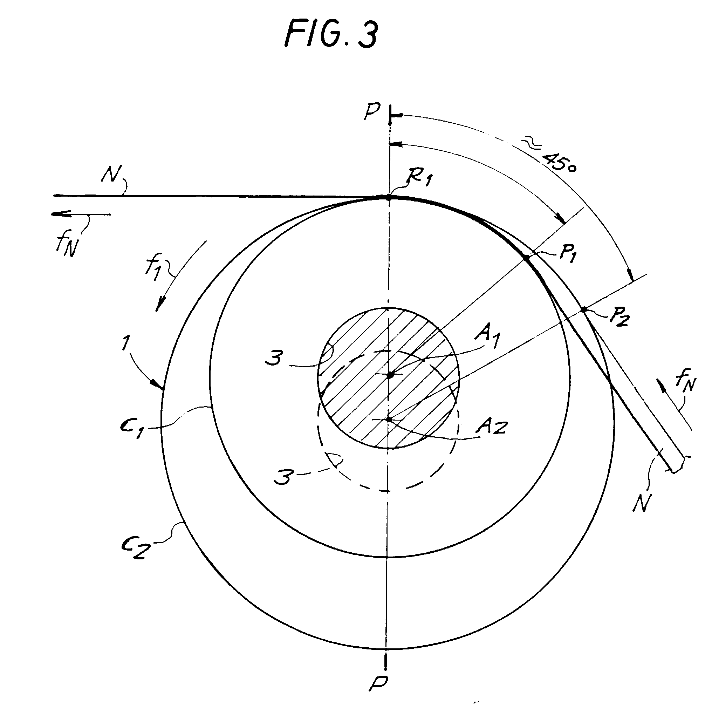

The operation of the roller 1 described above will be made clear by reference to Fig. 3. This figure shows a schematic cross section of the roller 1 at the middle M-M. The reference C₁ indicates the circumference corresponding to the edge of the minor base b of the bush 7^{XVI}, while C₂ indicates the circumference corresponding to the edge of the major base B of the bush 7^{I}. The reference A₁ indicates the point of intersection between the curved axis A of the shaft 3 and the plane of the section, in other words the plane with the path M-M in Fig. 1. The reference A₂ indicates the point of intersection between said axis and the plane, parallel to the plane with the path M-M, passing through the centre of the major base of the bush 7'. The reference P-P indicates the path of the plane containing the curved axis A of the shaft 3.

Because of what has been described above, the two circumferences C₁ and C₂ are tangent at the point R1, which represents the intersection between the straight line R and the plane of the section (plane M-M).

The roller 1 rotates in the direction indicated by the arrow f₁, and a web form material N, which advances in the direction of the arrow f_{N}, is run over it. The web form material N comes into contact with the roller 1 at a curved line. The references P₁ and P₂ indicate two points of contact between the web form material N and the minor base of the bush 7^{XVI} and the major base of the bush 7^{I} respectively. The web form material N leaves the roller 1 at the straight line R-R.

As a result of the curved shape of the axis A-A, in the area of contact between the web form material N and the roller 1 the material N tends to be widened and stretched in the transverse direction with respect to the direction of advance f_{N}. Since the widening effect ends at a straight line R-R, where the web form material N loses its contact with the roller 1 simultaneously over its whole width, the deformation of the material is minimal.

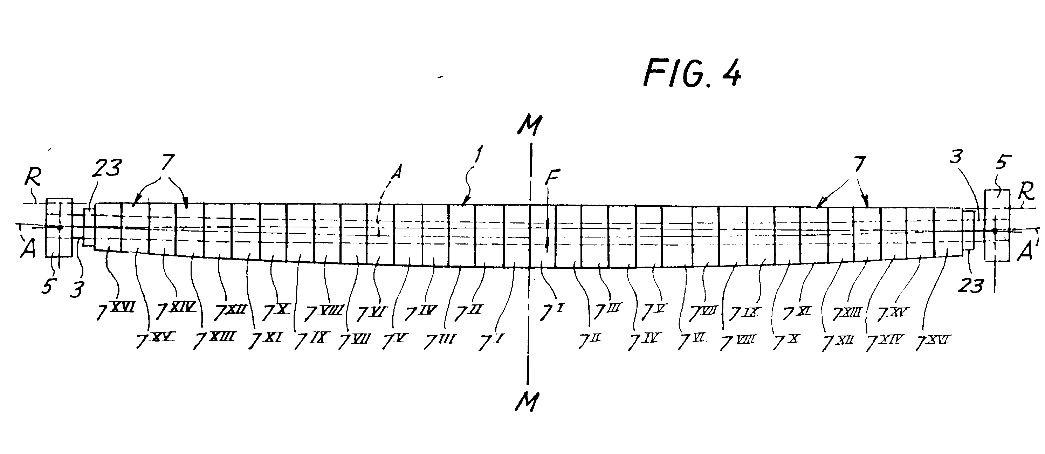

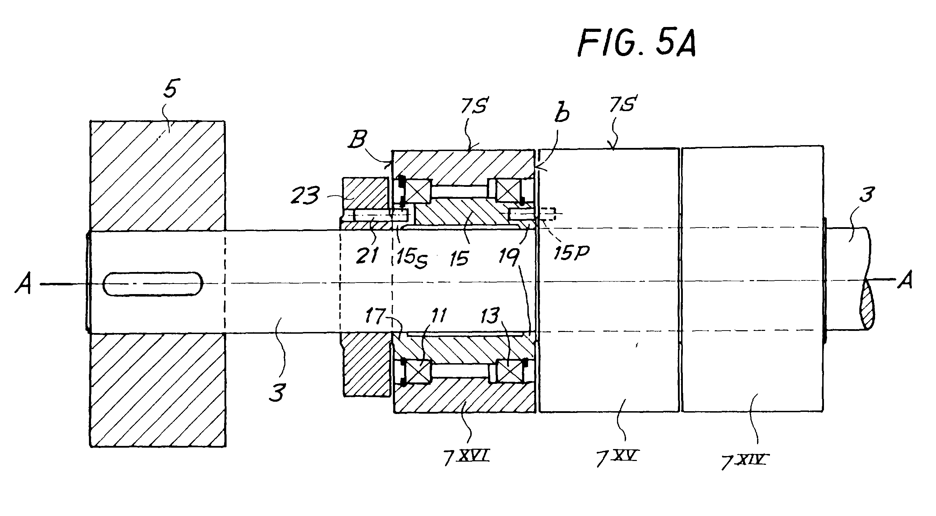

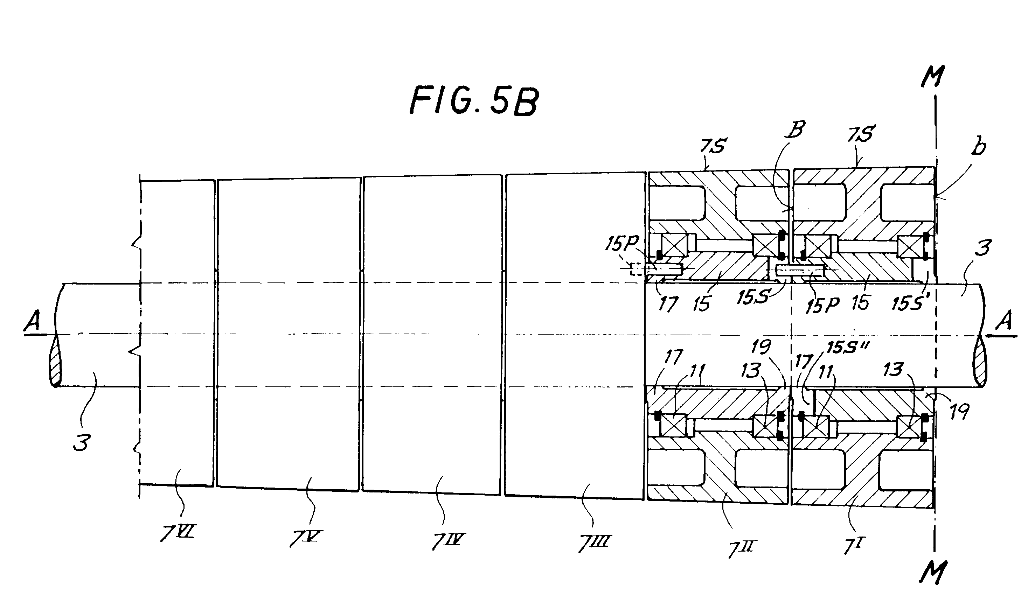

Figs. 4, 5A, 5B show a different embodiment of the roller, in which the individual bushes 7 have diameters decreasing from the middle to the ends. Identical numbers indicate parts identical or corresponding to those shown in the example in Figs. 1, 2A, 2B. In practice, the two sets of bushes 7^{I}-7^{XVI} are identical to each other, but are fitted with mirror symmetry, in other words with the bushes 7' of the largest size adjacent to the middle M-M and the bushes 7^{XVI} of smallest size at the ends.

The difference between the two configurations consists in the fact that, in the case shown in Figs. 1, 2A, 2B, the straight line R-R is located on the outer curve of the shaft 3, in other words on the side where the convexity of the axis A is present, whereas in the example shown in Figs. 4, 5A, 5B the straight line R-R is located on the inner curve of the curved shaft 3, in other words towards the concavity of the axis A. In the first case, the roller 3 has a concave surface, whereas in the second case it has a convex surface.

The truncated conical surfaces of the bushes 7 may be suitably covered with material having a high coefficient of friction, compatible with the nature of the material N run over the roller 3, which also has the purpose of ensuring that the bushes 7 are made to rotate.

It is to be understood that the drawing shows only an example provided solely as a practical demonstration of the invention, and that this invention may be varied in its forms and dispositions without departure from the scope of the guiding concept of the invention. Any presence of reference numbers in the attached claims has the purpose of facilitating the reading of the claims with reference to the description and to the drawing, and does not limit the scope of protection represented by the claims.

## Claims

1. Widening roller for widening sheets or strips of web form material (N), comprising a curved shaft (3) on which is supported a plurality of bushes (7) of circular cross section, disposed in sequence along the axis (A) of said curved shaft (3), characterized in that each of said bushes (7) has a non-cylindrical external surface of revolution with a major base (B) and a minor base (b), and in that the dimensions of the major and minor bases of bushes adjacent to each other vary gradually from the middle to the ends ofthe roller (1) in such a way that the plane (P-P) containing the curved axis (A) of said shaft intersects the surfaces of revolution of said bushes along an approximately straight line (R-R).

2. Widening roller as claimed in Claim 1, characterized in that said bushes have truncated conical external surfaces (7S).

3. Widening roller as claimed in Claim 1 or 2, characterized in that said approximately straight line (R-R) lies in the plane (P-P) containing the curved axis (A) of the shaft (3) on the outer curve side of the shaft, the sizes of the major and minor bases of said bushes (7) increasing from the middle (M-M) of the roller (1) towards the ends of the roller.

4. Widening roller as claimed in Claim 1 or 2, characterized in that said approximately straight line (R-R) lies in the plane (P-P) containing the curved axis (A) of the shaft (3) on the inner curve side of the shaft, the dimensions of the major and minor bases of said bushes (7) decreasing from the middle (M-M) of the roller towards the ends of the roller.

5. Widening roller as claimed in one or more of the preceding claims, characterized in that the major base (B) of each bush has a diameter approximately equal to the diameter of the minor base (b) of the adjacent bush which is of larger size.

6. Widening roller as claimed in one or more of the preceding claims, characterized in that said curved shaft has a development produced by the deformation of a rectilinear shaft supported at its ends and loaded in the middle with a concentrated load.

7. Widening roller as claimed in one or more of the preceding claims, characterized in that said curved shaft (3) has a deflection of between approximately 5 mm and approximately 20 mm.

8. Widening roller as claimed in one or more of the preceding claims, characterized in that each bush (7) is supported so that it is idle on said curved shaft (3) by means of bearings (11, 13) mounted on a sleeve (15) fitted on said curved shaft (3).

9. Widening roller as claimed in Claim 8, characterized in that said sleeve (15) has two annular projections (17, 19) spaced apart, forming points of support on the external surface of said curved shaft (3).

10. Widening roller as claimed in Claim 8 or 9, characterized in that said sleeves (15) are fixed together in such a way that they do not rotate with respect to each other.

11. Widening roller as claimed in Claim 10, characterized in that each of said sleeves (15) has frontal members (15S, 15P) for reciprocal engagement to prevent the relative rotation of one sleeve with respect to another.

12. Widening roller as claimed in Claim 10 or 11, characterized in that each of said sleeves (15) has at least one key (15P) at one of its ends and at least one radial groove (15S) at the opposite end, the key (15P) of each sleeve (15) being inserted in the radial groove of the adjacent sleeve.

13. Widening roller as claimed in Claim 12, characterized in that the two sleeves adjacent to the median section (M-M) of the curved shaft (3) have at one end a radial groove (15S") and a key (15P) and at the opposite end a radial groove (15S') diametrically opposite the radial groove (15S") at the other end.

14. Widening roller as claimed in one or more of Claims 8 to 13, characterized in that at the ends of said roller there are provided two locking rings (23) locked on to said curved shaft, the first of said sleeves (15) being fixed to one of these rings and the last sleeve being fixed to the other.
